# NEUE EUROPÄISCHE PATENTSCHRIFT

(11) **EP 1 208 539 B2**
(45) Veröffentlichungstag und Bekanntmachung des Hinweises auf die Entscheidung über den Einspruch: **28.12.2005**
(45) Hinweis auf die Patenterteilung: 02.04.2003
(21) Anmeldenummer: 00956277.8
(22) Anmeldetag: 25.07.2000
(51) Int. Cl.: G07C 9/00, G06K 9/00

(54) **VERFAHREN, VORRICHTUNG UND SYSTEM ZUR BIOMETRISCHEN AUTHENTISIERUNG EINER PERSON**
METHOD, DEVICE AND SYSTEM FOR BIOMETRICALLY AUTHENTICATING A PERSON
PROCEDE, DISPOSITIF ET SYSTEME D'AUTHENTIFICATION BIOMETRIQUE D'UNE PERSONNE

(30) Priorität: 30.07.1999 DE 19936097
(43) Veröffentlichungstag der Anmeldung: 29.05.2002
(73) Patentinhaber: Giesecke & Devrient GmbH, 81677 München (DE)
(72) Erfinder: MÖDL, Albert, D-86368 Gersthofen (DE); STEPHAN, Elmar, D-81371 München (DE); MÜLLER, Robert, D-81673 München (DE)
(74) Vertreter: Klunker . Schmitt-Nilson . Hirsch
(86) Internationale Anmeldenummer: PCT/EP2000/007123
(87) Internationale Veröffentlichungsnummer: WO 2001/009846

(56) Entgegenhaltungen:
- WO-A-95/26013
- WO-A-98/32093
- WO-A-98/35118
- WO-A-98/37519
- WO-A-98/40962
- WO-A-99/56250
- DE-A- 19 648 767
- DE-A- 19 830 058
- DE-A- 19 830 830
- DE-C- 19 610 066
- GB-A- 2 271 657
- "Technischer Bericht MSU-CPS 99-14" vom März 1999, Titel:"Fingerprint Matching: Data Acquisition and Performance Evaluation"

## Beschreibung

Die vorliegende Erfindung betrifft allgemein die Authentisierung einer Person durch Erfassen individueller biometrischer Merkmale dieser Person und Vergleich mit entsprechenden, zuvor gespeicherten biometrischen Merkmalen derselben Person. Insbesondere betrifft die Erfindung ein Verfahren zur biometrischen Authentisierung einer Person, eine Vorrichtung, die in diesem Zusammenhang Verwendung findet - beispielsweise ein Datenträger wie Chipkarte etc. -, sowie ein System umfassend eine solche Vorrichtung und Einrichtungen zum Erfassen und Vergleichen der biometrischen Merkmale.

Zur biometrischen Authentisierung werden biometrische Merkmale einer Person, beispielsweise ein Fingerabdruck, geprüft, indem das biometrische Merkmal erfaßt und mit einem zuvor abgespeicherten biometrischen Merkmal auf hinreichende Ähnlichkeit verglichen wird. Der positive Vergleich eröffnet dieser Person den Zugriff auf Daten, den Zutritt in Räume und ähnliche gegen unerlaubten Zugang geschützte Maßnahmen. Die als Referenzdaten gespeicherten biometrischen Merkmale können in einer beliebigen Vorrichtung gespeichert sein, beispielsweise in einem Fingerprint-Türöffner, oder aber mitführbar sein, indem sie in einer Chipkarte wie Geldkarte, Kreditkarte, Ausweiskarte und dergleichen gespeichert sind.

Biometrische Daten können üblicherweise nicht exakt reproduzierbar ermittelt werden, weswegen eine Übereinstimmung der gespeicherten Referenzdaten mit den aktuell gemessenen Vergleichsdaten nahezu unmöglich ist. Aus diesem Grunde wird das Vergleichsergebnis bereits dann als positiv festgesetzt, wenn die Übereinstimmung der verglichenen Daten einen allgemeinen Schwellwert überschreitet, wenn also beispielsweise eine Übereinstimmung nur zu 50% festgestellt wird.

Aus WO 95/26013 A1 ist ein System zur biometrischen Authentifizierung bekannt, bei dem neben einem spezifischen biometrischen Merkmal ein nicht spezifisches biometrisches Merkmal gespeichert und ausgewertet wird. Bei der Auswertung wird zunächst überprüft, ob das spezifische biometrische Merkmal einer zu authentisierenden Person mit dem gespeicherten spezifischen biometrischen Merkmal übereinstimmt. Nach erfolgreicher Überprüfung wird zudem das nicht spezifische biometrische Merkmal überprüft. Die Überprüfung des nicht spezifischen biometrischen Merkmals soll gewährleisten, daß die zu überprüfende Person auch tatsächlich selbst bei der Überprüfung anwesend ist

Aus DE 196 48 767 A1 ist eine Chipkarte bekannt, die einen Sensor zur Erfassung von Fingerabdrücken aufweist. Desweiteren enthält die Chipkarte Speicher, in welchen bei der erstmaligen Inbetriebnahme die Merkmale eines mittels des Sensors erfaßten Fingerabdrucks für eine spätere Überprüfung abgespeichert werden.

Nachteilhaft daran ist, daß die Erfassungsqualität der biometrischen Merkmale von Person zu Person unterschiedlich ist. Denn beispielsweise im Falle von trockener Haut verschlechtert sich das Meßergebnis eines Fingerabdrucks genauso wie bei übermäßig feuchter Haut. Deshalb wird der Schwellwert üblicherweise insgesamt sehr niedrig eingestellt, um alle Personen sicher authentisieren zu können. Ein niedriger Schwellwert bedeutet aber gleichzeitig einen niedrigen Sicherheitsstandard für die zugangsgeschützten Einrichtungen.

Aufgabe der vorliegenden Erfindung ist es daher, ein Verfahren, eine Vorrichtung und ein System zur sichereren biometrischen Authentisierung zur Verfügung zu stellen.

Die Aufgabe wird erfindungsgemäß durch die Merkmale der nebengeordneten Ansprüche gelöst. In den Unteransprüchen sind vorteilhafte Ausgestaltungen der Erfindung angegeben.

Der Erfindung liegt die Erkenntnis zugrunde, daß die Authentisierung insgesamt sicherer gestaltet werden kann, wenn bei der Authentisierung ein für jede Person individueller Parameter berücksichtigt wird, der anhand der individuellen Merkmalsqualität dieser Person ermittelt wird. Für das biometrische Merkmal "Fingerabdruck" stellt beispielsweise die Hautfeuchtigkeit einen Qualitätsfaktor dar. Hat die betreffende Person vergleichsweise eine Haut, die weder besonders trokken noch besonders feucht ist, so wird der Parameter für die individuelle Merkmalsqualität auf über 100% eines Standardwertes festgesetzt, und im Falle besonders feuchter oder besonders trockener Haut auf einen Wert unter 100% des Standardwertes.

Dieser erhöhte oder verringerte individuelle Parameter als absolute Abweichung zum Standardwert kann dann als Maß für die Absenkung des individuellen Schwellwertes gegenüber einem Standardschwellwert genommen werden. Der Standardschwellwert kann vergleichsweise hoch angesetzt sein, beispielsweise auf 80% statt der eingangs genannten 50%. Der individuelle Schwellwert liegt dann je nach individueller Merkmalsqualität im Bereich von 50% bis 80%. Dadurch wird die Nachahmung des biometrischen Merkmals entsprechend erschwert, wodurch sich die Sicherheit des Systems gleichermaßen erhöht.

Alternativ kann anhand des einmal ermittelten Parameters für die individuelle Merkmalsqualität die Sensorik eines Meßgeräts eingestellt werden, mit dem das biometrische Merkmal zum Zwecke der Authentisierung erneut erfaßt wird. Bei kapazitiver Messung des Fingerabdrucks wird die Ladungsmenge im Falle geeigneter Haut gegenüber der Standardeinstellung erhöht und bei weniger geeigneter Haut entsprechend verringert.

Dementsprechend kann es sinnvoll sein, für unterschiedliche, die Merkmalsqualität einer bestimmten Person beeinflussende Eigenschaften jeweils eigene Parameter zu ermitteln, die dann entweder individuell zur Abgleichung der Sensorik eines Meßgeräts berücksichtigt werden oder in einen für diese Person individuellen Schwellwert einfließen. Es ist auch eine Kombination dieser beiden Maßnahmen möglich.

Das erfindungsgemäße Verfahren funktioniert wie folgt. Zunächst werden biometrische Daten einer Person, beispielsweise ein Fingerabdruck, erfaßt und als Referenzdaten abgespeichert. Die Daten können beispielsweise in einem ersten Speicherbereich eines Datenträgers, beispielsweise einer Chipkarte, gespeichert werden. Diese Referenzdaten werden üblicherweise in einer gesicherten Umgebung und unter Instruktion von erfahrenem Fachpersonal erfaßt. Während dieser Phase der Referenzdatenerfassung werden zusätzlich nutzerindividuelle Informationen zur Qualität des biometrischen Merkmals bestimmt und in einem zweiten Speicherbereich abgespeichert. Bei der nutzerindividuellen Information kann es sich beispielsweise um die Feuchtigkeit der Haut oder um eine ähnliche, für das biometrische Merkmal relevante, individuelle Eigenschaft der betreffenden Person handeln. Diese Information über die individuelle Merkmalsqualität dient als Parameter bei der nachfolgenden Verifikationsphase.

In der Verifikationsphase wird das selbe biometrische Merkmal der betreffenden Person erneut erfaßt und in biometrische Daten umgesetzt, die mit dem im ersten Speicherbereich als Referenzdaten gespeicherten biometrischen Merkmal verglichen werden. Dieser Vergleich führt zu einer Übereinstimmung von regelmäßig unter 100%. Ob diese Übereinstimmung zur Authentisierung ausreicht, hängt davon ab, ob ein vorgegebener Schwellwert überschritten ist, der wiederum von dem im zweiten Speicherbereich gespeicherten Parameter abhängt. Hat die betreffende Person beispielsweise eine durchschnittliche Hautfeuchtigkeit, so hat der gespeicherte Parameter einen Wert von 100%. Dementsprechend ist der Schwellwert auf den höchsten durchschnittlichen Schwellwert eingestellt. Der durchschnittliche Schwellwert kann beispielsweise auf 80% Übereinstimmung eingestellt sein, so daß im vorliegenden Fall eine Authentisierung nur erfolgt, wenn die Übereinstimmung mindestens 80% beträgt. Bei besonders geeigneter oder besonders ungeeigneter Haut läge der Parameter beispielsweise bei 120% oder 80% und der zugehörige Schwellwert dementsprechend niedriger, so daß eine Authentisierung beispielsweise bereits bei 64%iger Übereinstimmung erfolgt.

Der Parameter kann aber auch oder zusätzlich dazu genutzt werden, die Sensorik zur erneuten Erfassung der biometrischen Daten in der Verifikationsphase an die individuelle Merkmalsqualität der Person anzupassen. Wie eingangs erwähnt, würde die Ladungsmenge eines kapazitiven Fingerabdrucksensors im Falle von geeigneter Haut entsprechend dem Parameter (beispielsweise 120%) erhöht (d.h. um 16%) und im Falle weniger geeigneter Haut (Parameter gleich 80%) entsprechend verringert (d.h. auf 64%) gegenüber der Standardeinstellung.

In weiterer Ausgestaltung der Erfindung ist vorgesehen, daß die der Person nach erfolgter Authentisierung eingeräumten Aktivitätsmöglichkeiten beschränkt werden ("Aktivitätsfilter"), z. B. kann es vorgesehen sein, bei finanziellen Transaktionen einen Höchstbetrag vorzugeben. Die Beschränkung wird vorgenommen, wenn entweder die individuelle Merkmalsqualität dieser Person von Natur aus schlecht ist, d.h. wenn der gespeicherte Parameter vom Standardwert abweicht, oder wenn die individuelle Merkmalsqualität zwar grundsätzlich gut ist, der Vergleich zwischen den gespeicherten Referenzdaten und den aktuell erfaßten biometrischen Daten aber nur knapp über dem zugehörigen, individuellen Schwellwert liegt. Denn in beiden Fällen ist die Gefahr, daß die erneut erfaßten biometrischen Daten manipuliertwurden, vergleichsweise hoch.

Eine weitere vorteilhafte Ausgestaltung der Erfindung sieht vor, daß das Sensorsystem zum erneuten Erfassen der biometrischen Daten während der Verifikationsphase so angepaßt wird, daß unabhängig von den jeweiligen Umgebungsbedingungen immer in etwa die selben Meßergebnisse erzielt werden. Beispielsweise kann die Ladungsmenge bei kapazitiven Fingerabdrucksensoren abhängig von der Luftfeuchtigkeit eingestellt werden. Denn an unterschiedlichen Orten (z.B. Bankfilialen) sowie zu unterschiedlichen Tages- oder Jahrezeiten ändern sich die Umwelteinflüsse ständig. Durch die zuvor beschriebene Maßnahme kann daher im Ergebnis die Authentisierung sicherer gestaltet werden. Andere Einflüsse der Umgebung sind beispielsweise die Lichtverhältnisse, Temperatur usw. Solche Einflüsse können berücksichtigt werden, indem beispielsweise eine Kamera bezüglich der Lichtempfindlichkeit justiert wird oder ein kapazitiver Sensorchip zur Erfassung des Fingerabdrucks elektrisch beheizt wird. Besonders vorteilhaft ist es, wenn die Sensorik an die in der Phase der Referenzdatenerfassung herrschenden Umgebungsbedingungen angepaßt wird. Dazu werden die bei der Referenzdatenerfassung herrschenden Umgebungsbedingungen in einem dritten Speicherbereich gespeichert, so daß sie zusammen mit den individuellen Parametern und den Referenzdaten verfügbar sind.

## Patentansprüche

1. Verfahren zur biometrischen Authentisierung einer Person, umfassend eine Referenzdatenerfassungsphase und eine Verifikationsphase mit den Schritten:
in der Referenzdatenerfassungsphase
- Erfassen von biometrischen Daten einer Person und Speichern der erfaßten biometrischen Daten als Referenzdaten und
- Ermitteln eines Parameters anhand von individuellen Eigenschaften der Person, die die sensorische Erfassung der biometrischen Daten beeinflussen, und Abspeichem des ermittelten Parameters der in mindestens einem der nachfolgenden Verfahrensschritte der Verifikationsphase als Parameter dient, sowie
in der Verifikationsphase
- erneutes Erfassen der biometrischen Daten der Person,
- Vergleichen der erneut erfaßten biometrischen Daten mit den Referenzdaten auf Übereinstimmung, und
- Authentisieren der Person, wenn die Übereinstimmung einen Grad erreicht, der über einem definierten Schwellwert liegt.

2. Verfahren nach Anspruch 1, **dadurch gekennzeichnet, daß** der ermittelte Parameter beim Schritt des Authentisierens der Person berücksichtigt wird.

3. Verfahren nach Anspruch 2, **dadurch gekennzeichnet, daß** der definierte Schwellwert abhängig ist von dem ermittelten Parameter.

4. Verfahren nach einem der Ansprüche 1 bis 3, **dadurch gekennzeichnet, daß** der ermittelte Parameter beim Schritt des erneuten Erfassens der biometrischen Daten berücksichtigt wird.

5. Verfahren nach Anspruch 4, **dadurch gekennzeichnet, daß** der ermittelte Parameter zur Justierung einer Sensorik zum erneuten Erfassen der biometrischen Daten verwendet wird.

6. Verfahren nach einem der Ansprüche 1 bis 5, **dadurch gekennzeichnet, daß** der Person abhängig von dem ermittelten Parameter begrenzte Aktivitätsmöglichkeiten eingeräumt werden.

7. Verfahren nach einem der Ansprüche 1 bis 6, **dadurch gekennzeichnet, daß** der Person abhängig von dem Grad der Übereinstimmung zwischen den erneut erfaßten biometrischen Daten und den gespeicherten Referenzdaten begrenzte Aktivitätsmöglichkeiten eingeräumt werden.

8. Verfahren nach einem der Ansprüche 1 bis 7, **gekennzeichnet durch** den zusätzlichen Schritt des Anpassens eines Sensorsystems zum erneuten Erfassen der biometrischen Daten an die zum Zeitpunkt des erneuten Erfassens herrschenden Umgebungsbedingungen.

9. Verfahren nach Anspruch 7, **dadurch gekennzeichnet, daß** die beim Erfassen der biometrischen Daten als Referenzdaten vorherrschenden Umgebungsbedingungen gespeichert und berücksichtigt werden, wenn das Sensorsystem beim erneuten Erfassen der biometrischen Daten an die zum Zeitpunkt des erneuten Erfassens herrschenden Umgebungsbedingungen angepaßt wird.

10. Chipkarte umfassend einen ersten Speicherbereich mit biometrischen Daten einer Person als Referenzdaten und einen zweiten Speicherbereich mit einem anhand von individuellen, die sensorische Erfassung der biometrischen Daten beeinflussenden Eigenschaften der Person ermittelten Parameter.

11. Chipkarte Anspruch 10, umfassend einen dritten Speicherbereich mit Information über die beim Erfassen der im ersten Speicherbereich enthaltenen biometrischen Daten vorherrschenden Umgebungsbedingungen.

12. System umfassend
- eine Chipkarte nach einem der Ansprüche 10 oder 11,
- eine erste Einrichtung zum Erfassen biometrischer Daten einer Person, und
- eine zweite Einrichtung zum Vergleichen der im ersten Speicherbereich der Chipkarte gespeicherten Referenzdaten mit den erfassten biometrischen Daten der Person auf Übereinstimmung und Authentisieren der Person, wenn die Übereinstimmung einen Grad erreicht hat, der über einem definierten Schwellwert liegt,
wobei mindestens eine der Einrichtungen mit dem im zweiten Speicherbereich der Chipkarte gespeicherten Parameter gekoppelt ist.

13. System nach Anspruch 12, **dadurch gekennzeichnet, daß** der zweite Speicherbereich der Chipkarte mit dem ermittelten Parameter und die Einrichtung zum Authentisieren der Person gekoppelt sind, indem der definierte Schwellwert von dem ermittelten Parameter abhängt.

14. System nach Anspruch 12 oder 13, **dadurch gekennzeichnet, daß** der zweite Speicherbereich mit dem ermittelten Parameter und die Einrichtung zum Erfassen der biometrischen Daten der Person gekoppelt sind, indem der ermittelte Parameter bei der Justierung einer Sensorik zum Erfassen der biometrischen Daten berücksichtigt wird.

15. System nach einem der Ansprüche 12 bis 14, **dadurch gekennzeichnet, daß** das System einen Aktivitätsfilter enthält, der, abhängig von dem ermittelten Parameter, variabel ist

16. System nach einem der Ansprüche 12 bis 15, **dadurch gekennzeichnet, daß** das System einen Aktivitätsfilter enthält, der abhängig von dem Grad der Übereinstimmung zwischen den erneut erfaßten biometrischen Daten und den gespeicherten Referenzdaten variabel ist.

17. System nach einem der Ansprüche 12 bis 16, soweit auf Anspruch 11 zurückbezogen, **dadurch gekennzeichnet, daß** die Einrichtung zum Erfassen der biometrischen Daten der Person ein Sensorsystem umfaßt, das abhängig von den im dritten Speicherbereich der Chipkarte gespelcherten Informationen an die beim Erfassen der biometrischen Daten der Person herrschenden Umgebungsbedingungen variabel einstellbar ist.

## Claims

1. A method for biometric authentication of a person, comprising a reference data detection phase and a verification phase with the steps of:
in the reference data detection phase,
- detecting a person's biometric data and storing the detected biometric data as reference data and
- determining a parameter with reference to the person's individual properties influencing the sensory detection of the biometric data, and storing the determined parameter which serves as a parameter in at least one of the following method steps of the verification phase, and
in the verification phase,
- redetecting the person's biometric data,
- comparing the redetected biometric data for a match with the reference data, and
- authenticating the person if the match reaches a degree above a defined threshold value.

2. A method according to claim 1, **characterized in that** the determined parameter is taken into account in the step of authenticating the person.

3. A method according to claim 2, **characterized in that** the defined threshold value is dependent on the determined parameter.

4. A method according to any of claims 1 to 3, **characterized in that** the determined parameter is taken into account in the step of redetecting the biometric data.

5. A method according to claim 4, **characterized in that** the determined parameter is used for adjusting a sensor system for redetecting the biometric data.

6. A method according to any of claims 1 to 5, **characterized in that** the person is granted limited possibilities of activity depending on the determined parameter.

7. A method according to any of claims 1 to 6, **characterized in that** the person is granted limited possibilities of activity depending on the degree of the match between the redetected biometric data and the stored reference data.

8. A method according to any of claims 1 to 7, **characterized by** the additional step of adapting a sensor system for redetecting the biometric data to the environmental conditions prevailing at the time of redetection.

9. A method according to claim 7, **characterized in that** the environmental conditions prevailing during detection of the biometric data as reference data are stored and taken into account when the sensor system is adapted upon redetection of the biometric data to the environmental conditions prevailing at the time of redetection.

10. A chip card comprising a first memory area with a person's biometric data as reference data and a second memory area with a parameter determined with reference to the person's individual properties influencing the sensory detection of the biometric data.

11. A chip card according to claim 10, comprising a third memory area with information on the environmental conditions prevailing during detection of the biometric data contained in the first memory area.

12. A system comprising
- a chip card according to either of claims 10 and 11,
- a first device for detecting a person's biometric data, and
- a second device for comparing the reference data stored in the first memory area of the chip card for a match with the person's detected biometric data and authenticating the person if the match reaches a degree above a defined threshold value,
at least one of the devices being coupled with the parameter stored in the second memory area of the chip card.

13. A system according to claim 12, **characterized in that** the second memory area of the chip card with the determined parameter and the device for authenticating the person are coupled by the defined threshold value depending on the determined parameter.

14. A system according to claim 12 or 13, **characterized in that** the second memory area with the determined parameter and the device for detecting the person's biometric data are coupled by the determined parameter being taken into account during adjustment of a sensor system for detecting the biometric data.

15. A system according to any of claims 12 to 14, **characterized in that** the system contains an activity filter which is variable in dependence on the determined parameter.

16. A system according to any of claims 12 to 15, **characterized in that** the system contains an activity filter which is variable in dependence on the degree of the match between the redetected biometric data and the stored reference data.

17. A system according to any of claims 12 to 16 insofar as dependent on claim 11, **characterized in that** the device for detecting the person's biometric data includes a sensor system which is variably adjustable to the environmental conditions prevailing during detection of the person's biometric data depending on the information stored in the third memory area of the chip card.

## Revendications

1. Procédé d'authentification biométrique d'une personne, comprenant une phase d'acquisition de données de référence et une phase de vérification comportant les étapes suivantes :
dans la phase d'acquisition de données de référence
- l'acquisition de données biométriques d'une personne et mémorisation des données biométriques acquises comme données de référence,
- la détermination d'un paramètre à l'aide de caractéristiques individuelles de la personne qui influent sur l'acquisition des données biométriques au moyen d'un équipement de détection, et mémorisation du paramètre déterminé qui dans au moins une des étapes suivantes du procédé, de sert de paramètre à la phase de vérification,
dans la phase de vérification
- une nouvelle acquisition des données biométriques de la personne,
- la comparaison de la concordance entre les données biométriques nouvellement acquises et les données de référence, et
- l'authentification de la personne si la concordance atteint un degré qui se situe au-dessus d'une valeur de seuil définie.

2. Procédé selon la revendication 1, **caractérisé en ce que** le paramètre déterminé est pris en compte à l'étape d'authentification de la personne.

3. Procédé selon la revendication 2, **caractérisé en ce que** la valeur de seuil définie est fonction du paramètre déterminé.

4. Procédé selon l'une des revendications 1 à 3, **caractérisé en ce que** le paramètre déterminé est pris en compte à l'étape de nouvelle acquisition des données biométriques.

5. Procédé selon la revendication 4, **caractérisé en ce que** le paramètre déterminé est utilisé pour ajuster un équipement de détection pour la nouvelle acquisition des données biométriques.

6. Procédé selon l'une des revendications 1 à 5, **caractérisé en ce que** des possibilités d'activité limitées sont accordées à la personne en fonction du paramètre déterminé.

7. Procédé selon l'une des revendications 1 à 6, **caractérisé en ce que** des possibilités d'activité limitées sont accordées à la personne en fonction du degré de concordance entre les données biométriques nouvellement acquises et les données de référence mémorisées.

8. Procédé selon l'une des revendications 1 à 7, **caractérisé par** l'étape supplémentaire consistant en l'adaptation, d'un système de détection destiné à la nouvelle acquisition des données biométriques, aux conditions ambiantes régnant à l'instant de la nouvelle acquisition.

9. Procédé selon la revendication 7, **caractérisé en ce que** les conditions ambiantes régnant lors de l'acquisition des données biométriques comme données de référence sont mémorisées et prises en compte lorsque le système de détection est, pour la nouvelle acquisition des données biométriques, adapté aux conditions ambiantes régnant à l'instant de la nouvelle acquisition.

10. Carte à puce comprenant une première zone de mémoire contenant des données biométriques d'une personne comme données de référence et une deuxième zone de mémoire contenant un paramètre déterminé à l'aide de caractéristiques individuelles de la personne qui influent sur l'enregistrement des données biométriques au moyen d'un équipement de détection.

11. Dispositif selon la revendication 10, comprenant une troisième zone de mémoire contenant des informations sur les conditions ambiantes régnant lors de l'acquisition des données biométriques contenues dans la première zone de mémoire.

12. Système comprenant:
- une carte à puce selon l'une des revendications 11 ou 12,
- un premier équipement pour l'acquisition de données biométriques d'une personne, et
- un deuxième équipement pour la comparaison de la concordance entre les données de référence mémorisées dans la première zone de mémoire de la carte à puce et les données biométriques acquises de la personne, et pour l'authentification de la personne si la concordance a atteint un degré qui se situe au-dessus d'une valeur de seuil définie, dans lequel
au moins l'un des équipements étant couplé au paramètre mémorisé dans la deuxième zone de mémoire de la carte à puce.

13. Système selon la revendication 12, **caractérisé en ce que** la deuxième zone de mémoire du dispositif contenant le paramètre déterminé et l'équipement d'authentification de la personne sont couplés par le fait que la valeur de seuil définie est fonction du paramètre déterminé.

14. Système selon la revendication 12 ou 13, **caractérisé en ce que** la deuxième zone de mémoire de la carte à puce contenant le paramètre déterminé et l'équipement d'acquisition des données biométriques de la personne sont couplées par le fait que le paramètre déterminé est pris en compte lors de l'ajustement d'un équipement de détection destiné à l'acquisition des données biométriques.

15. Système selon l'une des revendications 12 à 14, **caractérisé en ce que** le système comprend un filtre d'activité qui est variable en fonction du paramètre déterminé.

16. Système selon l'une des revendications 12 à 15, **caractérisé en ce que** le système comprend un filtre d'activité qui est variable en fonction du degré de concordance entre les données biométriques nouvellement acquises et les données de référence mémorisées.

17. Système selon l'une des revendications 12 à 16 et en référence à la revendication 11, **caractérisé en ce que** l'équipement d'acquisition des données biométriques de la personne comprend un système de détection qui peut être ajusté, d'une manière variable en fonction des informations mémorisées dans la troisième zone de mémoire de la carte à puce, aux conditions ambiantes régnant lors de l'acquisition des données.
